(19) Europäisches Patentamt
European Patent Office
Office européen des brevets

(11) EP 3 246 817 A1

(12) **EUROPEAN PATENT APPLICATION**

(43) Date of publication:
**22.11.2017 Bulletin 2017/47**

(51) Int Cl.:
*G06F 9/50* (2006.01)   *H04L 29/08* (2006.01)
*H04L 12/803* (2013.01)

(21) Application number: **17170849.8**

(22) Date of filing: **12.05.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.05.2016 JP 2016098958**

(71) Applicant: **Fujitsu Limited**
**Kawasaki-shi, Kanagawa 211-8588 (JP)**

(72) Inventors:
• YOKOTA, Koichi
  **Kawasaki-shi,, Kanagawa 211-8588 (JP)**
• OHNO, Takashi
  **Kawasaki-shi,, Kanagawa 211-8588 (JP)**
• NISHIGUCHI, Naoki
  **Kawasaki-shi,, Kanagawa 211-8588 (JP)**

(74) Representative: **Lewin, David Nicholas**
**Haseltine Lake LLP**
**Lincoln House, 5th Floor**
**300 High Holborn**
**London WC1V 7JH (GB)**

(54) **INFORMATION PROCESSING APPARATUS, INFORMATION PROCESSING METHOD AND INFORMATION PROCESSING PROGRAM**

(57)     An information processing device including: a storage unit configured to store attribute information of a plurality of communication terminals, and load information of a plurality of relay apparatuses, the attribute information including service information indicative of a service utilizable by each of the plurality of the communication terminals, the load information indicative of load applied to each relay apparatus, and a unit configured to: determine a priority degree of each of the plurality of communication terminals based on the service information, the more number of service utilizable by a communication terminal the higher priority degree of the communication terminal, for each communication terminal selected in descending order of the priority degree, identify at least one of the plurality of relay apparatuses capable of being utilized by the communication terminal based on the service information, select a relay apparatus to provide the service to the communication terminal from the at least one of the plurality of relay apparatus based on the load information, and transmit an instruction for permitting access with the communication terminal to the selected relay apparatus.

FIG. 2

**Description**

FIELD

The present embodiment relates to load distribution in wireless communication.

BACKGROUND

A cloud service provides various kinds of software and services to a user through a network. In recent years, various kinds of software and services are deployed at places of each local area (for example, in large commercial facilities) together with evolution and spread of the Internet of things (IoT) or a wireless communication function, and service provision in accordance with a context on the spot has become more significant.

If a user visits large commercial facilities, the possibility that the user may utilize a service according to a shop (according to a context) installed in the large commercial facilities is high. Therefore, in the large commercial facilities, an application delivery terminal for providing various services is installed, and a coupling environment for wireless local area network (LAN) communication is provided as a wireless access point for a communication terminal a user uses. Further, the application delivery terminal delivers an application for providing various services to a communication terminal.

In a related art, coupling management to an access point may be performed based on access point name (APN) information (for example, refer to PATENT LITERATURE 1).

In a related art, quality-of-service (QoS) control may be performed based on information of each player and information of a group of the players (for example, refer to PATENT LITERATURE 2).

In a related art, in a system for performing communication between a plurality of bases, communication bands may be allocated based on communication information transmitted from each base and information may be communicated with each base (for example, refer to PATENT LITERATURE 3).

In a related art, communication quality degradation of each mobile terminal may be detected and collected (for example, refer to PATENT LITERATURE 4).

[CITATION LIST]

[PATENT LITERATURE]

[PATENT LITERATURE 1] Japanese Laid-open Patent Publication No. 2006-146795
[PATENT LITERATURE 2] Japanese Laid-open Patent Publication No. 2007-58494
[PATENT LITERATURE 3] Japanese Laid-open Patent Publication No. 2014-116775
[PATENT LITERATURE 4] Japanese Laid-open Patent Publication No. 2015-41911

SUMMARY

[TECHNICAL PROBLEM]

It may possibly occur that a wireless LAN communication range and a service providing range do not coincide with each other. If load distribution of an access point (relay apparatus) that is an access destination of a communication terminal is performed in such an environment, it is not considered that the load distribution is performed efficiently because the load distribution is determined principally based on the communication quality. Further, in the load distribution based on the communication quality, a service provided by an access point, a service utilized by the communication terminal side and so forth are not taken into consideration, and therefore, the load distribution is not efficient.

According to one aspect of the present embodiment, a relay apparatus which a communication terminal is to access is selected based on user attribute information, and the load on the relay apparatus may be distributed.

[SOLUTION TO PROBLEM]

As one aspect, the disclosed technology includes an information processing device including: a storage unit configured to store attribute information of a plurality of communication terminals, and load information of a plurality of relay apparatuses, the attribute information including service information indicative of a service utilizable by each of the plurality of the communication terminals, the load information indicative of load applied to each relay apparatus, and a unit configured to: determine a priority degree of each of the plurality of communication terminals based on the service information, the more number of service utilizable by a communication terminal the higher priority degree of the communication terminal, for each communication terminal selected in descending order of the priority degree, identify at least one of the plurality of relay apparatuses capable of being utilized by the communication terminal based on the service information, select a relay apparatus to provide the service to the communication terminal from the at least one of the plurality of relay apparatus based on the load information, and transmit an instruction for permitting access with the communication terminal to the selected relay apparatus.

[ADVANTAGEOUS EFFECT OF INVENTION]

With the present embodiment, it is possible to select a relay apparatus which a communication terminal is to access based on user attribute information and distribute the load on the relay apparatus.

BRIEF DESCRIPTION OF DRAWINGS

FIG. 1 is a view depicting an example of a relay apparatus which a communication terminal is to access;
FIG. 2 is a block diagram depicting an example of a system according to the present embodiment;
FIG. 3 is a view illustrating an example of data from a communication terminal to be stored into an information processing apparatus;
FIG. 4 is a view illustrating an example of data from a PSv to be stored into an information processing apparatus;
FIG. 5 is a view depicting an example of a hardware configuration of an information processing apparatus; and
FIG. 6 is a flow chart illustrating an example of a process of an information processing apparatus according to the present embodiment.

DESCRIPTION OF EMBODIMENT

The present embodiment implements distribution of load on a server based on information on wireless communication environment, user attribute information such as a service capable of being utilized (used) by a user and information from a server that is a terminal coupling destination.

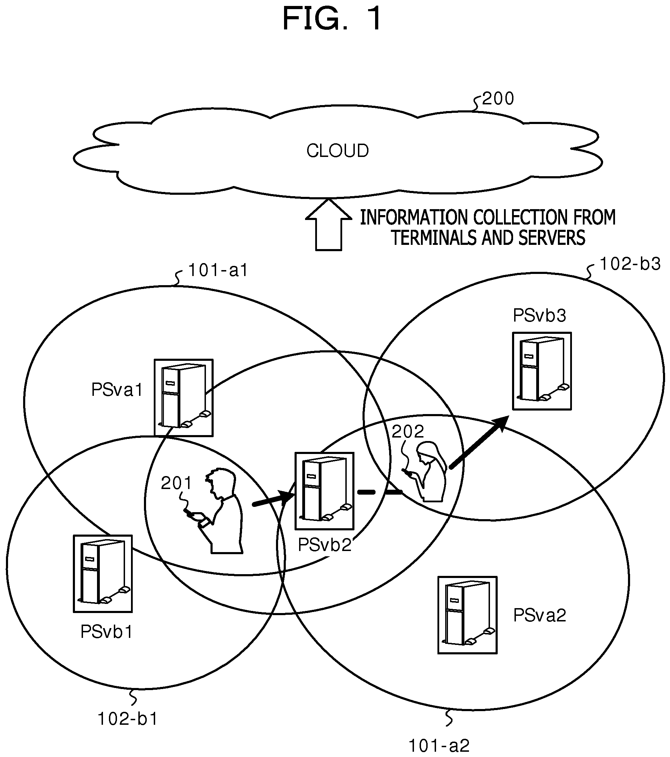

FIG. 1 is a view depicting an example of a relay apparatus which a communication terminal is to access. The relay apparatus in FIG. 1 is a place server (PSv) and provides a coupling environment for wireless LAN communication as a wireless access point to a communication terminal a user uses. PSvs PSva1 and PSva2 and PSvb1 to PSvb3 deliver an application for providing various services to communication terminals. Here, the PSvs PSva1 and PSva2 are relay apparatuses that provide a service a. The PSvs PSvb1 to PSvb3 are relay apparatuses that provide another service b.

A communication terminal 201 is a terminal used by a user A. It is assumed that the communication terminal 201 is a terminal that may utilize both of the services a and b. Another communication terminal 202 is a terminal used by another user B. It is assumed that the communication terminal 202 is a terminal that may utilize the service b. A cloud 200 is a system that manages coupling among the PSvs PSva1 and PSva2 and PSvb1 to PSvb3 and includes a plurality of information processing apparatuses (shared servers). A process of the cloud 200 may be executed by a unitary information processing apparatus. Therefore, in the following description, the process of the cloud 200 is described to be executed by a unitary information processing apparatus.

A wireless LAN communication range 101-a1 is a range within which a communication terminal may perform wireless communication with the PSv PSva1. A wireless LAN communication range 101-a2 is a range within which a communication terminal may perform wireless communication with the PSv PSva2. A wireless LAN communication range 102-b1 is a range within which a communication terminal may perform wireless communication with the PSv PSvb1. A wireless LAN communication range 102-b2 is a range within which a communication terminal may perform wireless communication with the PSv PSvb2. A wireless LAN communication range 102-b3 is a range within which a communication terminal may perform wireless communication with the PSv PSvb3.

An example of a process of an information processing apparatus included in the cloud 200 is described below.

If an access request from a communication terminal is received, the information processing apparatus in the cloud 200 collects information on wireless communication environment, user attribute information and so forth from the communication terminal. The information on wireless communication environment includes a communication quality value represented by a numerical value of a bit error rate (BER), a reception signal intensity represented by a numerical value of a received signal strength indicator (RSSI), and a service set identifier (SSID) of an access point with which communication may be performed. The user attribute information includes the sex of a user who uses the communication terminal and information of a service the user may utilize.

Further, the information processing apparatus in the cloud 200 collects the number of coupling terminals at present and a service load situation (use rate of a central processing unit (CPU), a memory or the like) at present from the PSv.

The information processing apparatus in the cloud 200 calculates a priority degree relating to each communication terminal that is communicating with a PSv at present based on the collected information. The priority degree is a parameter used when the information processing apparatus determines the PSv which each communication terminal is to access. The priority degree is determined in accordance with the following expression:

Priority degree = m*n*a(service a)*BER + m*n*b(service b)*BER + ...

Here, "m" in the expression for determining the priority degree is 1 where utilization of the service by the communication terminal is possible but is 0 where utilization of the service by the communication terminal is not possible. "n" in the expression for determining the priority degree indicates whether or not there is a PSv with which the communication terminal is communicatable based on the SSID, and "n" is 1 where there is a PSv with which the communication terminal is communicatable but is 0 where there is no PSv with which the communication terminal is communicatable. BER in a*BER or b*BER indicates a communication quality value to each service. a or b in a*BER or b*BER is a parameter set in advance in response to an importance degree, a utilization situation or the like in each service and is a weighting value used to weight the value of the BER to adjust the priority degree by the parameter.

The priority degree of the communication terminal 201 that may utilize both the service a and the service b is represented as a*BER + b*BER. The priority degree of the communication terminal 202 that may utilize the service b is represented as b*BER. Therefore, the priority degree of the communication terminal 201 is higher than that of the communication terminal 202.

The information processing apparatus in the cloud 200 selects a PSv that is to become a communication target from the communication terminal 201 having a high priority degree. For example, the information processing apparatus extracts PSvs that provide a service capable of being utilized by the communication terminal 201 as a PSv that may become a communication target of the communication terminal 201 and allocates a PSv whose load is the lowest from among the extracted PSvs. The communication terminal 201 may utilize both the service a and the service b. Here, in the example of FIG. 1, it is assumed that the PSv PSvb2 is a PSv whose load is the lowest. The information processing apparatus allocates, from among all of the PSvs PSva1 and PSva2 and PSvb1 to PSvb3, the PSv PSvb2 that is a PSv whose load is the lowest to the communication terminal 201.

Then, the information processing apparatus selects a PSv that is to become a communication target of the communication terminal 202 having a priority degree lower than that of the communication terminal 201. For example, the information processing apparatus extracts PSvs that provide a service capable of being utilized by the communication terminal 202 as a PSv that is to become a communication target of the communication terminal 202 and allocates a PSv whose load is the lowest from among the extracted PSvs. The communication terminal 202 may utilize the service b. Therefore, the information processing apparatus allocates, from among all of the PSvs PSvb1 to PSvb3, the PSv PSvb3 whose load is the lowest to the communication terminal 202 after the allocation to the communication terminal 201. Further, if it is assumed that there is a communication terminal that may utilize the service a, one of the PSvs PSva1 and PSva2 whose load is lower is allocated to the current communication terminal.

If the communication destination of the communication terminal merely is an access point (relay apparatus) whose communication quality is the best, communication is concentrated upon the PSv PSvb2. However, in the present embodiment, the load of communication may be distributed by selecting, by the information processing apparatus, a PSv to be accessed based on information of the service capable of being utilized by the communication terminal.

By collecting attribute information of the user and controlling a PSv which the communication terminal is to access in such a manner as described above, for example, a terminal of a female which may utilize the service b may be coupled to a PSv prepared for a female by the service b. Further, as a different example, a communication terminal of a male which may utilize both the service a and the service b may be coupled to a PSv provided by the service b because the load is increased already in the PSv provided by the service a.

In the present embodiment, coupling to a PSv installed in a local area corresponding to a service to be utilized by a user may be implemented based on the communication quality and the user attribute information. Consequently, service provision according to a context on the spot may be performed irrespective of the communication quality.

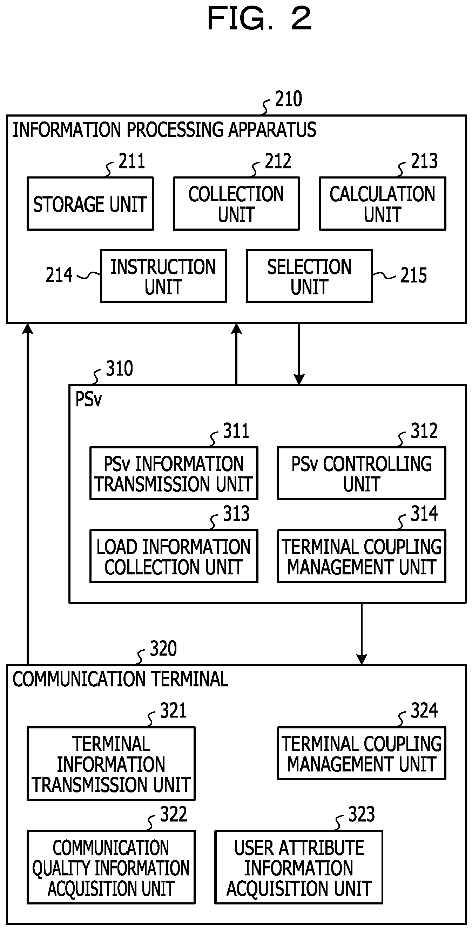

FIG. 2 is a block diagram depicting an example of a system according to the present embodiment. An information processing apparatus 210 that actually performs a process in the cloud 200 includes a storage unit 211, a collection unit 212, a calculation unit 213, an instruction unit 214 and a selection unit 215. A PSv 310 represents one of access points, for example, of the PSvs PSva1 and PSva2 and PSvb1 to PSvb3 and so forth of FIG. 1 in the form of a block diagram. A communication terminal 320 represents the communication terminal 201 or the communication terminal 202 of FIG. 1 in the form of a block diagram.

The collection unit 212 collects information on wireless communication environment, user attribute information and so forth from communication terminals. The storage unit 211 stores the information on wireless communication environment, user attribute information and so forth collected from the communication terminals. Further, the collection unit 212 collects the number of coupling terminals and a service load situation from PSvs. The storage unit 211 stores the number of coupling terminals and the service load situation collected from the PSvs.

The calculation unit 213 calculates a priority degree corresponding to each communication terminal based on the collected information. The selection unit 215 selects a PSv which each communication terminal is to access based on a service (user attribute information) capable of being utilized by the communication terminal or on the priority degree. For example, the selection unit 215 selects a PSv that provides a service coincident with the service capable of being utilized by the communication terminal and besides is the lowest in load. The instruction unit 214 issues an instruction to the PSv selected by the selection unit 215 to permit access to the communication terminal. It is to be noted that processes of the storage unit 211, collection unit 212, calculation unit 213, instruction unit 214 and selection unit 215 may be allocated to a plurality of information processing apparatuses.

The PSv 310 includes a PSv information transmission unit 311, a PSv controlling unit 312, a load information collection unit 313 and a terminal coupling management unit 314. The load information collection unit 313 collects load information such as a use rate of a CPU and of a memory and the number of coupling in the own PSv. The PSv information transmission unit 311 transmits the collected load information to the cloud 200 side (information processing apparatus 210). The PSv controlling unit 312 notifies the terminal coupling management unit 314 of a signal for performing coupling control based on the instruction from the information processing apparatus 210. The terminal coupling management unit 314 is an interface for managing coupling to the communication terminal 320.

The communication terminal 320 includes a terminal information transmission unit 321, a communication quality information acquisition unit 322, a user attribute information acquisition unit 323 and a terminal coupling management unit 324. The communication quality information acquisition unit 322 acquires communication quality information in the communication terminal 320. The user attribute information acquisition unit 323 acquires user attribute information including a service capable of being utilized by the communication terminal 320 in the own terminal. The terminal information transmission unit 321 transmits the acquired user attribute information and communication quality information to the cloud 200 side (information processing apparatus 210). The terminal coupling management unit 324 is an interface for communicating with the PSv 310.

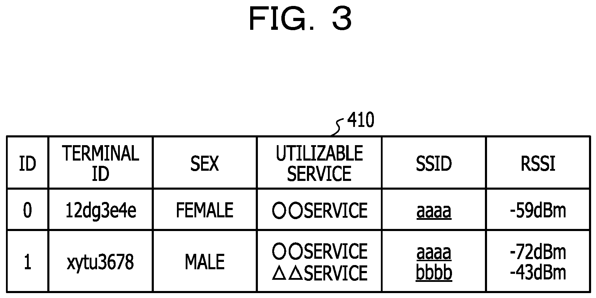

FIG. 3 is a view illustrating an example of data from a communication terminal to be stored into an information processing apparatus. The storage unit 211 of the information processing apparatus 210 stores the information collected from the communication terminals as terminal information 410. The terminal information 410 includes items such as id, terminal ID, sex, utilizable service, SSID and RSSI. ID is an identification number allocated for identifying data (column) stored in a table of the terminal information 410. Terminal ID is identification information for identifying a communication terminal. Sex indicates the sex of a user who uses the communication terminal. Utilizable service is information indicative of a service capable of being utilized by the communication terminal. SSID is identification information for identifying an access point with which communication may be performed. RSSI is reception signal intensity decibel m (dBm) of the communication terminal.

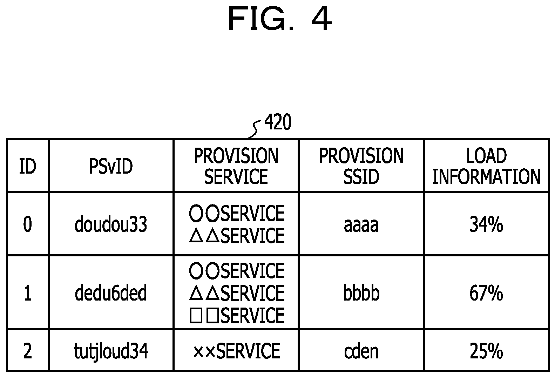

FIG. 4 is a view illustrating an example of data from a PSv to be stored into an information processing apparatus. The storage unit 211 of the information processing apparatus 210 stores information collected from PSvs as PSv information 420 therein. The PSv information 420 includes items such as id, PSvID, provision service, provision SSID and load information.

ID is an identification number allocated for identifying data (column) stored in a table of the PSv information 420. PSvID is identification information for identifying a PSv. Provision service is information indicative of a service provided by each PSv. Provision SSID is identification information of an access point for being provided to access from the communication terminal by the PSv. The load information represents, for example, a use rate of the CPU or the memory in the form of percent.

In the present embodiment, coupling to a PSv installed in a local area corresponding to a service to be utilized by a user may be implemented based on the communication quality and the user attribute information. Consequently, service provision according to a context on the spot may be performed irrespective of the communication quality.

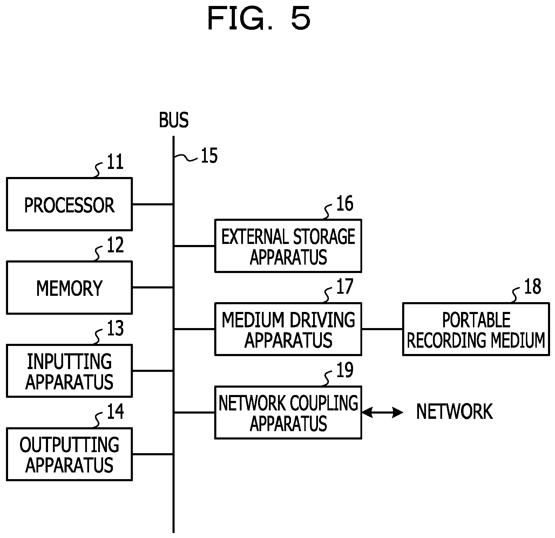

FIG. 5 is a view depicting an example of a hardware configuration of an information processing apparatus. The information processing apparatus 210 includes a processor 11, a memory 12, a bus 15, an external storage apparatus 16 and a network coupling apparatus 19. Further, the information processing apparatus 210 may include, as optional components, an inputting apparatus 13, an outputting apparatus 14 and a medium driving apparatus 17. The information processing apparatus 210 may be implemented, for example, by a computer.

The processor 11 may be configured as an arbitrary processing circuit including a CPU. The processor 11 operates as the calculation unit 213 and the selection unit 215. It is to be noted that the processor 11 may execute a program stored, for example, in the external storage apparatus 16. The memory 12 operates as the storage unit 211. The memory 12 suitably stores data obtained by operation of the processor 11 and data used for processing of the processor 11. The network coupling apparatus 19 is used for communication with a different apparatus and operates as the collection unit 212 and the instruction unit 214.

The inputting apparatus 13 is implemented, for example, as a button, a keyboard, or a mouse, and the outputting apparatus 14 is implemented as a display unit or the like. The bus 15 couples the processor 11, memory 12, inputting apparatus 13, outputting apparatus 14, external storage apparatus 16, medium driving apparatus 17 and network coupling apparatus 19 such that transfer of data between them may be performed. The external storage apparatus 16 stores a program, data and so forth therein and provides the stored information to the processor 11 and so forth suitably. The medium driving apparatus 17 may output data in the memory 12 or the external storage apparatus 16 to a portable recording medium 18 and may read out a program, data or the like from the portable recording medium 18. Here, the portable recording medium 18 may be implemented as an arbitrary storage medium capable of being carried including a floppy disk, a magneto-optical (MO) disk, a compact disk recordable (CD-R) and a digital versatile disk recordable (DVD-R).

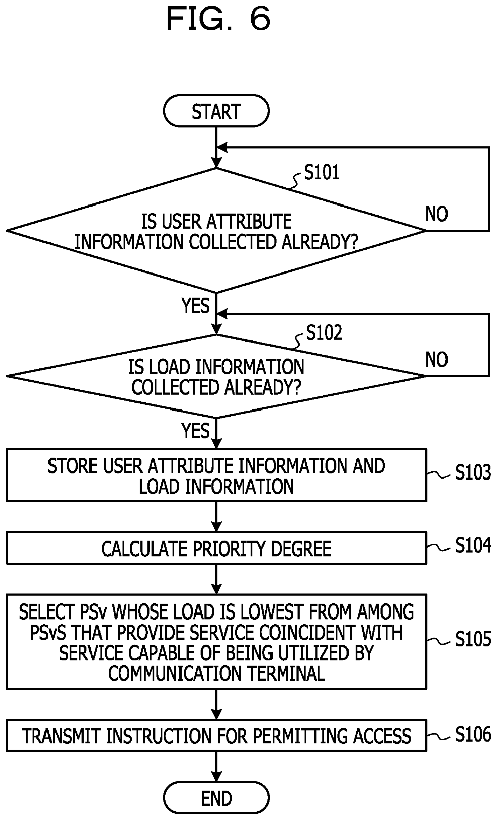

FIG. 6 is a flow chart illustrating an example of a process of an information processing apparatus according to the present embodiment. The collection unit 212 decides whether or not user attribute information is collected (received) already from a communication terminal (step S101). If the user attribute information is not collected as yet (NO at step S101), the collection unit 212 repetitively performs the process at step S101. If the user attribute information is collected already (YES at step S101), the collection unit 212 decides whether or not load information is collected (received) already from a PSv (step S102). If the load information is not collected as yet (NO at step S102), the collection unit 212 repetitively performs the process at step S102. It is to be noted that the processes at steps S101 and S102 may be executed in the inverse order or in parallel to each other.

If the load information is collected already (YES at step S102), the storage unit 211 stores the collected user attribute information and load information (step S103). The calculation unit 213 calculates a priority degree of each communication terminal based on the user attribute information (step S104).

The selection unit 215 extracts PSvs that provide a service coincident with a service capable of being utilized by the communication terminal based on the user attribute information and then selects a PSv whose load is the lowest from among the extracted PSvs (step S105). The instruction unit 214 transmits an instruction for permitting access with the communication terminal to the extracted PSv (step S106).

In the present embodiment, coupling to a PSv installed in a local area corresponding to a service to be utilized by a user may be implemented based on the communication quality and the user attribute information. Consequently, service provision according to a context on the spot may be performed irrespective of the communication quality. Further, also the PSv itself is included as the service the user utilizes.

In any of the above aspects, the various features may be implemented in hardware, or as software modules running on one or more processors. Features of one aspect may be applied to any of the other aspects. The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

[REFERENCE SIGNS LIST]

101-a1, 101-a2, 102-b1 to 102-b3: Wireless LAN communication range
200: Cloud
201, 202, 320: Communication terminal
210: Information processing apparatus
211: Storage unit
212: Collection unit
213: Calculation unit
214: Instruction unit
215: Selection unit
310: PSv
311: PSv information transmission unit
312: PSv controlling unit
313: Load information collection unit
314, 324: Terminal coupling management unit
321: Terminal information transmission unit
322: Communication quality information acquisition unit
323: User attribute information acquisition unit

Claims

1. An information processing device comprising:

    a storage unit configured to store attribute information of a plurality of communication terminals, and load information of a plurality of relay apparatuses, the attribute information including service information indicative of a service utilizable by each of the plurality of the communication terminals, the load information indicative of load applied to each relay apparatus; and
    a unit configured to:

        determine a priority degree of each of the plurality of communication terminals based on the service information, the more number of service utilizable by a communication terminal the higher priority degree of the communication terminal;
        for each communication terminal selected in descending order of the priority degree, identify at least one of the plurality of relay apparatuses capable of being utilized by the communication terminal based on the service information;
        select a relay apparatus to provide the service to the communication terminal from the at least one of the plurality of relay apparatus based on the load information; and
        transmit an instruction for permitting access with the communication terminal to the selected relay apparatus.

2. The information processing device according to claim 1, wherein the load information includes a use rate of at least one of a CPU and memory of each relay apparatus.

3. The information processing device according to any of the preceding claims, wherein memory is further configured to store provision service information indicative of a service provided by each relay apparatus, and the processor refers to the provision service information to identify the at least one of the plurality of relay apparatuses capable of being utilized by the communication terminal based on the service.

4. The information processing device according to any of the preceding claims, wherein the processor is further configured to
receive the attribute information from the plurality of communication terminals; and
store the received attribute information in the memory.

5. The information processing device according to any of the preceding claims, wherein the processor selects the relay apparatus having a lowest load among the identified at least one of the plurality of relay apparatuses and transmits the instruction to the communication terminal having the highest priority degree among the plurality of communication terminals.

6. The information processing device according to any of the preceding claims, wherein the priority degree is determined according to an expression:

$$\text{Priority degree} = m*n*a(\text{service a})*BER + m*n*b(\text{service b})*BER + ...,$$

wherein m is 1 where utilization of the service by the communication terminal is possible and 0 where utilization of the service by the communication terminal is not possible, n is 1 where there is a relay apparatus with which the communication terminal is communicatable and 0 where there is no relay apparatus with which the communication terminal is communicatable, BER indicates a communication quality value to a service a and a service b, and a and b in a*BER or b*BER is a parameter set in advance and is a weighting value used to weight the value of the BER to adjust the priority degree by the parameter.

7. The information processing device according to any of the preceding claims, wherein the information processing device is a load distribution device to control distribution of wireless communications over a network distributing cloud services through the plurality of relay apparatuses to the plurality of communication terminals.

8. An information processing method comprising:

storing, in a storage unit, attribute information of a plurality of communication terminals, and load information of a plurality of relay apparatuses, the attribute information including service information indicative of a service utilizable by each of the plurality of the communication terminals, the load information indicative of load applied to each relay apparatus;

determining a priority degree of each of the plurality of communication terminals based on the service information, the more number of service utilizable by a communication terminal the higher priority degree of the communication terminal;

for each communication terminal selected in descending order of the priority degree, identifying at least one of the plurality of relay apparatuses capable of being utilized by the communication terminal based on the service information;

selecting a relay apparatus to provide the service to the communication terminal from the at least one of the plurality of relay apparatus based on the load information; and

transmitting an instruction for permitting access with the communication terminal to the selected relay apparatus.

9. An information processing program which, when executed on the computer causes the computer to carry out the information processing method according to claim 8.

# FIG. 1

200

CLOUD

INFORMATION COLLECTION FROM
TERMINALS AND SERVERS

101-a1

102-b3

PSvb3

PSva1

202

201

PSvb2

PSvb1

PSva2

102-b1

101-a2

# FIG. 2

210

## INFORMATION PROCESSING APPARATUS

| 211 | 212 | 213 |
|---|---|---|
| STORAGE UNIT | COLLECTION UNIT | CALCULATION UNIT |

214 — INSTRUCTION UNIT     SELECTION UNIT — 215

310

## PSv

| 311 | 312 |
|---|---|
| PSv INFORMATION TRANSMISSION UNIT | PSv CONTROLLING UNIT |

| 313 | 314 |
|---|---|
| LOAD INFORMATION COLLECTION UNIT | TERMINAL COUPLING MANAGEMENT UNIT |

320

## COMMUNICATION TERMINAL

| 321 | 324 |
|---|---|
| TERMINAL INFORMATION TRANSMISSION UNIT | TERMINAL COUPLING MANAGEMENT UNIT |

| 322 | 323 |
|---|---|
| COMMUNICATION QUALITY INFORMATION ACQUISITION UNIT | USER ATTRIBUTE INFORMATION ACQUISITION UNIT |

# FIG. 3

410

| ID | TERMINAL ID | SEX | UTILIZABLE SERVICE | SSID | RSSI |
|----|-------------|-----|--------------------|------|------|
| 0 | 12dg3e4e | FEMALE | ○○SERVICE | aaaa | -59dBm |
| 1 | xytu3678 | MALE | ○○SERVICE △△SERVICE | aaaa bbbb | -72dBm -43dBm |

# FIG. 4

420

| ID | PSvID | PROVISION SERVICE | PROVISION SSID | LOAD INFORMATION |
|---|---|---|---|---|
| 0 | doudou33 | ○○SERVICE<br>△△SERVICE | aaaa | 34% |
| 1 | dedu6ded | ○○SERVICE<br>△△SERVICE<br>□□SERVICE | bbbb | 67% |
| 2 | tutjloud34 | ××SERVICE | cden | 25% |

# FIG. 5

BUS

PROCESSOR 11

MEMORY 12

INPUTTING APPARATUS 13

OUTPUTTING APPARATUS 14

15

EXTERNAL STORAGE APPARATUS 16

MEDIUM DRIVING APPARATUS 17

PORTABLE RECORDING MEDIUM 18

NETWORK COUPLING APPARATUS 19

NETWORK

# FIG. 6

```
                    ┌─────────┐
                    │  START  │
                    └────┬────┘
                         │
                         ▼
                    ╱─────────╲◄──────────────────┐
                   ╱     ╱S101   ╲                 │
                  ╱   IS USER ATTRIBUTE  ╲  NO     │
                  ╲ INFORMATION COLLECTED ╱────────┘
                   ╲    ALREADY?    ╱
                    ╲─────────╱
                         │ YES
                         ▼
                    ╱─────────╲◄──────────────────┐
                   ╱     ╱S102   ╲                 │
                  ╱   IS LOAD INFORMATION  ╲  NO   │
                  ╲   COLLECTED ALREADY?   ╱───────┘
                   ╲    ╱
                    ╲─────────╱
                         │ YES
                         ▼
        ┌───────────────────────────────────┐
        │  STORE USER ATTRIBUTE INFORMATION AND │ ～ S103
        │         LOAD INFORMATION          │
        └────────────────┬──────────────────┘
                         ▼
        ┌───────────────────────────────────┐
        │      CALCULATE PRIORITY DEGREE     │ ～ S104
        └────────────────┬──────────────────┘
                         ▼
        ┌───────────────────────────────────┐
        │ SELECT PSv WHOSE LOAD IS LOWEST FROM AMONG │
        │ PSvS THAT PROVIDE SERVICE COINCIDENT WITH  │ ～ S105
        │  SERVICE CAPABLE OF BEING UTILIZED BY      │
        │       COMMUNICATION TERMINAL       │
        └────────────────┬──────────────────┘
                         ▼
        ┌───────────────────────────────────┐
        │ TRANSMIT INSTRUCTION FOR PERMITTING ACCESS │ ～ S106
        └────────────────┬──────────────────┘
                         ▼
                    ┌─────────┐
                    │   END   │
                    └─────────┘
```

Europäisches
Patentamt

European
Patent Office

Office européen
des brevets

# EUROPEAN SEARCH REPORT

Application Number

EP 17 17 0849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 774 668 A (CHOQUIER PHILIPPE [FR] ET AL) 30 June 1998 (1998-06-30)<br>* column 1, line 64 - line 67 *<br>* column 2, line 43 - line 65 *<br>* column 3, line 1 - line 6 *<br>* column 7, last line *<br>* column 8, line 1 - line 13 *<br>* column 11, line 38 - line 43 *<br>* column 13, line 16 - line 17 *<br>* column 13, line 40 - line 49 *<br>----- | 1-9 | INV.<br>G06F9/50<br>H04L29/08<br>H04L12/803 |
| X | US 2006/036743 A1 (DENG YUEFAN [US] ET AL) 16 February 2006 (2006-02-16)<br>* paragraphs [0008] - [0010], [0012], [0014] - [0016], [0023] - [0026], [0028], [0032] *<br>----- | 1-9 | |
| X | US 2014/256338 A1 (XU LIXIANG [CN] ET AL) 11 September 2014 (2014-09-11)<br>* paragraphs [0039] - [0056], [0059] - [0061], [0063], [0066], [0068] - [0071], [0074], [0076], [0080] - [0082], [0096] - [0098] *<br>----- | 1-9 | |
| | | | TECHNICAL FIELDS SEARCHED (IPC)<br><br>G06F<br>H04L |
| X | US 2013/279334 A1 (XU JUN [US] ET AL) 24 October 2013 (2013-10-24)<br>* paragraphs [0009] - [0017], [0044] - [0046], [0049], [0050], [0056], [0057], [0069] *<br>----- | 1-9 | |
| A | WO 2010/120281 A1 (ALCATEL LUCENT USA INC [US]; NAGARAJAN RAMESH [US]; CHU THOMAS P [US]) 21 October 2010 (2010-10-21)<br>* page 19 *<br>* page 8, last paragraph *<br>* page 9, line 1 - line 7 *<br>* page 1, line 21 - line 30 *<br>* page 3, line 26 - line 32 *<br>----- <br>-/-- | 1-9 | |

The present search report has been drawn up for all claims

| Place of search | Date of completion of the search | Examiner |
|---|---|---|
| The Hague | 9 October 2017 | Buzgan, C |

EPO FORM 1503 03.82 (P04C01)

Europäisches
Patentamt

European
Patent Office

Office européen
des brevets

## EUROPEAN SEARCH REPORT

Application Number

EP 17 17 0849

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/224481 A1 (BABIARZ JOZEF [CA] ET AL) 6 September 2012 (2012-09-06) * paragraphs [0064] - [0069], [0138], [0139], [0161], [0162], [0183], [0191] * | 1-9 | |
| A | EP 2 495 935 A1 (SAMSUNG ELECTRONICS CO LTD [KR]) 5 September 2012 (2012-09-05) * paragraphs [0015] - [0019], [0024] - [0030], [0033], [0051] * | 1-9 | |
| A | EP 2 950 527 A1 (RICOH CO LTD [JP]) 2 December 2015 (2015-12-02) * paragraphs [0008], [0010], [0060] - [0067], [0111], [0117] * | 1-9 | |

TECHNICAL FIELDS SEARCHED (IPC)

The present search report has been drawn up for all claims

| Place of search | Date of completion of the search | Examiner |
|---|---|---|
| The Hague | 9 October 2017 | Buzgan, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 17 0849

This annex lists the patent family members relating to the patent documents cited in the above-mentioned European search report.
The members are as contained in the European Patent Office EDP file on
The European Patent Office is in no way liable for these particulars which are merely given for the purpose of information.

09-10-2017

| Patent document cited in search report | | Publication date | Patent family member(s) | | Publication date |
|---|---|---|---|---|---|
| US 5774668 | A | 30-06-1998 | US | 5774668 A | 30-06-1998 |
| | | | US | 5951694 A | 14-09-1999 |
| US 2006036743 | A1 | 16-02-2006 | US | 2001039581 A1 | 08-11-2001 |
| | | | US | 2006036743 A1 | 16-02-2006 |
| | | | US | 2013268653 A1 | 10-10-2013 |
| US 2014256338 | A1 | 11-09-2014 | CN | 103068048 A | 24-04-2013 |
| | | | CN | 106060877 A | 26-10-2016 |
| | | | US | 2014256338 A1 | 11-09-2014 |
| | | | WO | 2013062297 A1 | 02-05-2013 |
| US 2013279334 | A1 | 24-10-2013 | NONE | | |
| WO 2010120281 | A1 | 21-10-2010 | US | 2011299427 A1 | 08-12-2011 |
| | | | WO | 2010120281 A1 | 21-10-2010 |
| US 2012224481 | A1 | 06-09-2012 | CA | 2733870 A1 | 02-09-2012 |
| | | | CA | 2734138 A1 | 02-09-2012 |
| | | | US | 2012224481 A1 | 06-09-2012 |
| EP 2495935 | A1 | 05-09-2012 | EP | 2495935 A1 | 05-09-2012 |
| | | | KR | 20120101609 A | 14-09-2012 |
| | | | US | 2012226739 A1 | 06-09-2012 |
| EP 2950527 | A1 | 02-12-2015 | EP | 2950527 A1 | 02-12-2015 |
| | | | JP | 2015226186 A | 14-12-2015 |
| | | | US | 2015349873 A1 | 03-12-2015 |

EPO FORM P0459

For more details about this annex : see Official Journal of the European Patent Office, No. 12/82

**EP 3 246 817 A1**

**REFERENCES CITED IN THE DESCRIPTION**

**Patent documents cited in the description**

- JP 2006146795 A
- JP 2007058494 A
- JP 2014116775 A
- JP 2015041911 A